## Europäisches Patentamt

## European Patent Office

## Office européen des brevets

(19)

(11) Veröffentlichungsnummer: **0 215 857**

**B1**

(12) # EUROPÄISCHE PATENTSCHRIFT

(45) Veröffentlichungstag der Patentschrift:
**12.07.89**

(51) Int. Cl.⁴: **C 10 J 3/52**

(21) Anmeldenummer: **86901777.2**

(22) Anmeldetag: **04.03.86**

(86) Internationale Anmeldenummer:
**PCT/DE 86/00080**

(87) Internationale Veröffentlichungsnummer:
**WO 86/05198 (12.09.86 Gazette 86/20)**

(54) **VERFAHREN ZUM AUSSCHLEUSEN VON RÜCKSTANDSPARTIKELN AUS EINEM DRUCKVERGASUNGSREAKTOR.**

(30) Priorität: **05.03.85 DE 3507628**

(43) Veröffentlichungstag der Anmeldung:
**01.04.87 Patentblatt 87/14**

(45) Bekanntmachung des Hinweises auf die Patenterteilung:
**12.07.89 Patentblatt 89/28**

(84) Benannte Vertragsstaaten:
**BE DE FR GB IT**

(56) Entgegenhaltungen:
**EP-A-0 011 151**
**DE-A-1 421 659**
**DE-A-3 320 595**
**DE-C-944 812**

(73) Patentinhaber: **VEBA OEL Entwicklungs-Gesellschaft mbH, Alexander- von- Humboldt-Strasse, D-4650 Gelsenkirchen 2 (DE)**

(72) Erfinder: **SMIESKOL, Stefan, Helgolandring 104, D-4300 Essen 1 (DE)**
Erfinder: **HARJUNG, Johann, Schölerwiese 9, D-4270 Dorsten 1 (DE)**
Erfinder: **MECKEL, Joachim, Langenbroich 29, D-4030 Ratingen 6 (DE)**

(74) Vertreter: **Lindner, Wolfgang, Dr., Alexander- von- Humboldt- Strasse Postfach 20 10 45, D-4650 Gelsenkirchen (DE)**

LIBER, STOCKHOLM 1989

## Beschreibung

Die Erfindung betrifft ein Verfahren zum kontinuierlichen oder absatzweisen Ausschleusen von Rückstandspartikeln in Form von Asche-, Schlacke- sowie ggf. festen Kohlenstoffteilchen aus einer Abzugsöffnung eines Druckvergasungsreaktors nach dem Wirbelbett- oder Flugstaubprinzip mittels mindestens einer in einem Gehäuse drehbaren Förderschnecke, wobei der Eintrittsstutzen des Gehäuses mit dem die Rückstandspartikel aufnehmenden Abzugsstutzen des Reaktors in Verbindung steht und wobei die Teilchen von der Förderschnecke durch eine Austragsöffnung in eine Ausschleuskammer o. dgl. ausgeschleust werden.

Für den Austrag von Asche-, Schlacke- sowie ggf. Kohlenstoffteilchen (Vergasungsrückständen), die bei der Druckvergasung flüssiger oder fester Brennstoffe anfallen, sind verschiedene diskontinuierlich arbeitende Ausschleusesysteme auf trockener oder nasser Basis bekannt.

So ist eine Austragvorrichtung für einen vorzugsweise unter Druck arbeitenden Wirbelschichtreaktor vorgeschlagen worden, welche durch einen regelbaren Antrieb einen dosierten Materialaustrag ermöglicht und wobei das auszutragende Material das Verschlußelement bildet, so daß keine Schließkörper wie Schieber u. dgl. vorgesehen sind und wobei das Förderelement als Förderschnecke ausgebildet ist (vgl. DE-A-3 241 239).

Ein ähnliches Prinzip ist bei einem drucklosen Vergasungsreaktor mit nassem Ascheaustrag verwirklicht, bei dem die Teilchen des Vergasungsrückstandes in dem mit Wasser gefüllten axialen Bodenstutzen des Vergasungsreaktors gesammelt werden und bei dem eine Förderschnecke für den Abtransport der unterhalb der Wasseroberfläche sedimentierten Rückstandsteilchen sorgt (EP-A-0 117 765).

In der EP-A-0 011 151 ist eine Vorrichtung zum Eintragen von festen Brennstoffen in einen Druckvergasungsreaktor beschrieben, wobei die Austragsöffnung eines Schneckengehäuses mit einer auf ein Verschlußorgan einwirkenden einstellbaren Druckeinrichtung versehen ist, die mit Wasser oder einem Bindemittel vermischten Teilchen gegen den Schließdruck zu einem Massepfropfen verdichtet werden und der Massepfropfen über die im Gehäuse befindliche Austragsöffnung ausgestoßen wird.

Bei den bekannten Systemen, insbesondere für den Trockenaustrag von Asche sowie Schlackenbestandteilen, die bei der Druckvergasung anfallen, sind bisher Schleusen angewendet worden, wie das allgemein durchgeführt wird, wenn Feststoffströme zwischen Räumen unterschiedlichen Drucks zu transportieren sind und das Entweichen eventuell schädlicher Gase verhindert werden muß. Zu derartigen Schleusensystemen gehören weitere Apparate, Maschinen und Steuerungseinrichtungen. Hierbei werden ein oder mehrere Bunker, die in der Regel unterhalb des Vergasungsreaktors angeordnet und durch Armaturenkombinationen voneinander und vom Reaktor getrennt werden können, eingesetzt.

Eine Ascheaustragung mit zwei Bunkern wird beispielsweise so realisiert, daß trockene oder nasse Asche vom Reaktor unter Druck in den ersten Bunker übergeführt wird. Nachdem Reaktor und Bunker getrennt sind, wird der Bunker entspannt, die Entspannungsgase werden abgeleitet. Anschließend wird die Verbindung zum zweiten Bunker geöffnet, so daß die trockene Asche oder Rückstands-Wasser-Suspension in den darunter liegenden drucklosen Behälter gelangt. Im Falle des trockenen Ascheaustrages ist es zusätzlich erforderlich, den drucklosen Behälter mit Spülgas zu durchleiten, um das CO- und $H_2S$-haltige Rohgas aus dem Asche- bzw. Rückstandshaufwerk vor der Entleerung zu entfernen. Anschließend wird die Verbindung zwischen den Bunkern geschlossen, der direkt unter dem Reaktor angeordnete Bunker wird mit Stickstoff, Kohlendioxid oder Produktgas bespannt. Die Asche bzw. der Rückstand wird aus dem drucklosen Bunker über geeignete Transporteinrichtungen entfernt. Ein derartiges Schleusensystem arbeitet diskontinuierlich. Beim Bespannen des Bunkers mit Produktgas werden Druckschwankungen im Vergasungssystem verursacht. Die Steuerung des Asche- bzw. Rückstandsaustrages ist aufwendig, weil eine Vielzahl von Schließarmaturen eingesetzt werden müssen. Besonders im Falle des trockenen Ascheaustrages ist der Betrieb der Schließarmaturen aufgrund von Abnutzung, Rillenbildung und Korrosion der Abdichtungsflächen sehr wartungsintensiv und störungsanfällig.

Der Erfindung liegt die Aufgabe zugrunde, bei einem Verfahren der eingangs angegebenen Art einen kontinuierlich arbeitenden störungsunempfindlichen Asche- bzw. Rückstandsaustrag bei einer deutlichen Verminderung des Aufwandes für Schließarmaturen und Absperrorgane zu ermöglichen und ohne daß größere Druckschwankungen im eigentlichen Vergasungsprozeß auftreten.

Die Lösung dieser Aufgabe besteht darin, daß die Austragsöffnung des Schneckengehäuses mit einer auf ein Verschlußorgan zwecks Ausübung eines Schließdrucks einwirkenden einstellbaren Druckeinrichtung versehen ist und die mit Wasser vermischten Teilchen gegen den Schließdruck des Verschlußorgans über eine in die Ausschleuskammer führende Austragöffnung ausgestoßen werden, wobei die Betätigung des Verschlußorgans über eine Hydraulikeinrichtung, die mit dem im Reaktor herrschenden Druck in Verbindung steht und einen dem Reaktordruck entsprechenden Schließdruck auf das Verschlußorgan überträgt, erfolgt.

Es ist aber auch ein absatzweises Ausschleusen asche- oder schlackeartiger Rückstandsteilchen möglich, wenn bei Einsatz von Brennstoffen mit geringem Aschegehalt deren Anfall eine durchgehende kontinuierliche Austragung nicht erfordert.

Eine Abwandlung des vorstehenden Verfahrens sieht vor, die Betätigung des Verschlußorgans über ein vom Reaktionsraum des Druckvergasungsreaktors unabhängiges Hydraulik-Druckhalteaggregat vorzunehmen.

Durch diese Maßnahmen wird innerhalb der Fördereinrichtung aus Gehäuse und Förderschnecke ein mindestens so großer Druck wie in dem Vergasungsreaktor aufrechterhalten.

Eine weitere Ausgestaltung sieht vor, daß auf das Verschlußorgan ein Zusatzdruck bezogen auf den Betriebsdruck des Reaktors übertragen wird. Der Zusatzdruck kann durch eine justierbare Feder aber auch durch andere gleichwirkende Mittel übertragen werden. Da die Förderschnecke gegen den Zusatzdruck fördert, wird der Aufbau eines Massepfropfens aus den Asche- oder auch Schlacketeilchen im Zusammenwirken mit dem Wasser bei der vorliegenden Naßausschleusung ermöglicht.

Das Verschlußorgan dient in an sich bekannter Weise als Stellglied eines Regelkreises, in welchem der im Reaktor herrschende oder ein von außen z. B. über ein Hydraulik-Druckaggregat aufgeprägter Druck die Führungsgröße darstellt.

Eine geeignete Ausbildung des vorliegenden Verfahrens bzw. einer entsprechenden, zur Ausübung dieses Verfahrens geeigneten Vorrichtung besteht darin, daß das Verschlußorgan als Kolben, Kegel o. dgl. ausgebildet ist und daß die Austragsöffnung einen entsprechend gearbeiteten Sitz für den Kolben, Kegel o. dgl. aufweist.

Das angegebene Verfahren ermöglicht, das Schleusensystem wesentlich zu verkleinern und zu vereinfachen, wobei insbesondere an Armaturen und Verschlüssen gespart wird. Darüber hinaus resultiert ein geringerer Wartungsaufwand und eine geringere Störanfälligkeit.

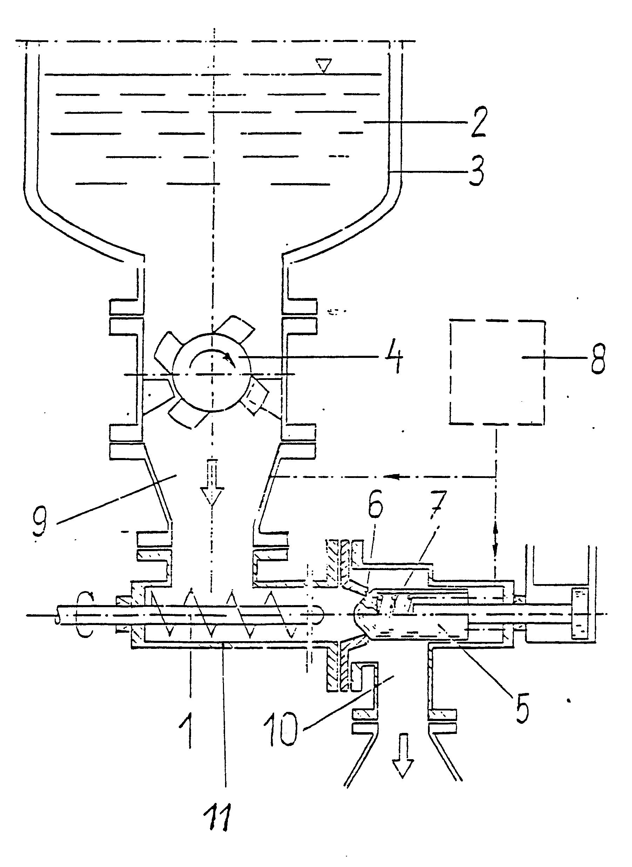

Eine zur Ausübung des vorgeschlagenen Verfahrens einer Naßausschleusung geeignete Vorrichtung wird weiter anhand der Beschreibung der Figur wie folgt erläutert.

Die in der Wasservorlage 2 des Druckvergasers 3 anfallende Asche und Schlacketeilchen gelangen in den Vorbunker 9. Durch die über den Brecher 4, der im Auslauf der Wasservorlage 2 vor dem Vorbunker 9 angeordnet ist, erfolgende Vorzerkleinerung wird verhindert, daß größere Schlackefäden über den Eintrittsstutzen des Gehäuses 11 in den Bereich der Einzugszone der Förderschnecke 1 gelangen und diese blockieren.

Die Förderschnecke 1 mit unterschiedlich ausgelegter Steigung ist unterhalb des Druckvergasers (Vergasungsreaktors) 3 in einem Gehäuse 11 drehbar angeordnet.

Die Asche und Schlacketeilchen gelangen vom Vorbunker 9 in das Gehäuse 11.

Die Austragsschnecke 1 endet in einem Abstand vor der Austragsöffnung 6 des Schneckengehäuses 11. Bei Betätigung der Schnecke 1 wird in dem freien Raum von Gehäuse 11 vor der Austragsöffnung 6 gegen den von der Feder 7 auf den Kolben 5 ausgeübten Zusatzdruck ein Massepfropfen gebildet, der als zusätzliches Dichtelement zwischen der unter dem Druck des Vergasungsreaktors stehenden Wasservorlage 2 und den darin gesammelten Asche- oder auch Schlacketeilchen bzw. dem mit einem flüssigen Bindemittel angefeuchteten Rückstand und dem Raum außerhalb des Austragsstutzens 10 dienen kann.

Die Austragsöffnung 6 des Schneckengehäuses 11 endet mit dem Sitz für den Kolben 5. Der Kolben 5 wird hydraulisch an die an dem Sitz angearbeitete Dichtfläche angepreßt, wobei der Schließdruck des Kolbens 5 etwa dem Betriebsdruck des Druckvergasers 3 entspricht.

Bei geringem Asche- oder auch Schlackeanfall wird mittels einer Füllstandsmessung und -regelung der Schneckenantrieb entsprechend ein- bzw. abgeschaltet, um so ein völliges Entleeren des Vorbunkers und des Schneckengehäuses 11 zu verhindern. Wichtig ist, daß über den Eintrittsstutzen des Gehäuses 11 ein ausreichend großer Zulaufquerschnitt vorhanden ist, wodurch insbesondere Störungen des Schlacke-Granulatzulaufes in der Einzugszone der Schnecke 1 vermieden werden.

Die Steigung der Schnecke 1 ist so dimensioniert, daß durch Bildung eines Staus wie oben erläutert Druck abgebaut wird. Der zwischen Schneckenende und Austragsöffnung 6 des Schneckengehäuses 11 mit wasserhaltigem Rückstand ausgefüllte Raum dient als Sicherheitszone, um einen stärkeren Abfluß von Flüssigkeit aus der Wasservorlage 2 zu verhindern.

Durch die justierbare Feder 7 wird auf den Kolben 5 ein Zusatzdruck übertragen, so daß beim Betrieb der Förderschnecke 1 die Asche- bzw. Rückstandsbestandteile gegen den weitgehend konstanten, von Betriebsdruckschwankungen unabhängigen von der Feder übertragenen Zusatzdruck ausgebracht werden.

Ein guter Sitz mit ausreichender Abdichtung wird beispielsweise durch eine drucküber tragende Verbindung eines entsprechenden Stellschiebers für das Verschlußorgan, im vorliegenden Beispiel für den Kolben 5, mit der Wasservorlage 2 im Vergasungsreaktor 3 oder dem Hydraulik-Druckhalteaggregat 8 erreicht. Damit soll gewährleistet werden, daß am Stellschieber immer mindestens der jeweilige Betriebsdruck des Vergasungsreaktors 3 anliegt und daß die Austragsvorrichtung auch bei schwankendem Betriebsdruck mittels des Verschlußorgans stets geschlossen gehalten wird.

Das Antriebsorgan für die Schnecke 1 wird unter Berücksichtigung der mechanischen Eigenschaften der auszuschleusenden Asche- und Rückstandsbestandteile so dimensioniert, daß der beispielsweise von der Feder 7 auf das Verschlußorgan übertragene Zusatzdruck sicher überwunden wird und daß das Verschlußorgan beim Betrieb der Schnecke 1 unter dem Druck des aus den Asche- bzw. Rückstandsbestandteilen aufgebauten Massepfropfens die Austragsöffnung freigibt.

Die Asche- bzw. Rückstandsbestandteile gelangen in einen beispielsweise unterhalb des Austragsstutzens 10 angeordneten drucklosen Zwischenbunker. Das im Falle des Einsatzes einer Wasservorlage mit der Förderschnecke gleichzeitig mittransportierte und ebenfalls die Austragsöffnung passierende Wasser bewirkt eine Fluidisierung des ausgestoßenen Massepfropfens. In dem Zwischenbunker kann die Entgasung der Rückstandsbestandteile vorgenommen werden.

Mit dem angegebenen Verfahren wird ein kontinuierliches Ausschleusen ggf. auch noch festen Kohlenstoff enthaltender Rückstandsbestandteile aus der Vergasung fester oder flüssiger Brennstoffe wie Kohle, Petrolkoks, Schwelkoks, Hydrierrückstände, Vakuumrückstände u. dgl. zur Herstellung von Synthesegas und dessen Weiterverarbeitungsprodukten ermöglicht.

## Patentansprüche

1. Verfahren zum Ausschleusen von Rückstandspartikeln aus einer Abzugsöffnung eines Druckvergasungsreaktors nach dem Wirbelbett- oder Flugstaubprinzip mittels mindestens einer in einem Gehäuse drehbaren Förderschnecke, wobei der Eintrittsstutzen des Gehäuses mit dem die Rückstandspartikel aufnehmenden Abzugsstutzen des Reaktors in Verbindung steht und wobei die Teilchen von der Förderschnecke durch eine Austragsöffnung in eine Ausschleuskammer o. dgl. ausgeschleust werden, dadurch gekennzeichnet, daß die Austragsöffnung des Schneckengehäuses mit einer auf ein Verschlußorgan zwecks Ausübung eines Schließdrucks einwirkenden einstellbaren Druckeinrichtung versehen ist, die mit Wasser vermischten Teilchen gegen den Schließdruck des Verschlußorgans über eine in die Ausschleuskammer führende Austragöffnung ausgestoßen werden, wobei die Betätigung des Verschlußorgans über eine Hydraulikeinrichtung, die mit dem im Reaktor herrschenden Druck in Verbindung steht und einen dem Reaktordruck entsprechenden Schließdruck auf das Verschlußorgan überträgt, erfolgt.

2. Verfahren nach Anspruch 1, abgewandelt dadurch, daß die Betätigung des Verschlußorgans über ein vom Reaktionsraum unabhängiges Hydraulik-Druckhalteaggregat erfolgt.

3. Verfahren nach Anspruch 1, dadurch gekennzeichnet, daß auf das Verschlußorgan ein Zusatzdruck bezogen auf den Betriebsdruck des Reaktors übertragen wird.

## Claims

1. A process for the discharge of residue particles from a discharge opening of a pressure gasification reactor using the fluidized bed or the flue dust principle, by means of at least one screw conveyor rotatable in a housing, whereby the intake connection of the housing is connected to the discharge connection, receiving the residue particles, of the reactor, and whereby the particles are removed from the screw conveyor through a discharge opening into a discharge chamber, or the like, characterized in that the discharge opening of the screw conveyor housing is provided with an adjustable pressure device which operates a closing element to exercise a closing pressure, and the particles mixed with water are ejected against the closing pressure of the closing element through a discharge opening leading into the discharge chamber, whereby the operation of the closing element is achieved by means of a hydraulic device which is connected to the pressure prevailing in the reactor and transmits a closing pressure corresponding to the reactor pressure on the closing element.

2. A process according to claim 1, modified in that the operation of the closing element is achieved by means of a hydraulic pressure holding unit which is independent of the reaction space.

3. A process according to claim 1, characterized in that an additional pressure, in relation to the operating pressure of the reactor, is transmitted to the closing element.

## Revendications

1. Procédé d'évacuation de particules de résidu à partir d'une ouverture de décharge d'un réacteur de gazéification sous pression selon le principe en lit tourbillonnant ou de la poussière volante, à l'aide d'au moins une vis de transport qui peut tourner dans un carter pour lequel la tubulure d'entrée du carter entre en communication avec la tubulure de décharge du réacteur qui reçoit les particules de résidus et dans lequel les particules sont évacuées de la vis de transport par une ouverture de distribution dans une chambre d'évacuation ou similaire, caractérisé en ce que l'ouverture de distribution du carter de la vis est munie d'un appareillage de pression qui peut être réglé, et agit sur un organe d'obturation en vue de l'exercice d'une pression de fermeture, que les particules mélangées à l'eau, sont expulsées contre la pression de fermeture de l'organe d'obturation par l'intermédiaire d'une ouverture de distribution qui amène dans une chambre d'évacuation, pour lequel la mise en fonctionnement de l'organe d'obturation s'effectue par l'intermédiaire d'un appareillage hydraulique qui est mis en connexion avec la pression qui règne dans le réacteur et qui transfère une pression de fermeture correspondant à la pression du réacteur, à l'organe d'obturation.

2. Procédé selon la revendication 1, modifié en ce que la mise en fonctionnement de l'organe d'obturation s'effectue par l'intermédiaire d'un appareillage hydraulique qui maintient la pression, indépendant de l'espace de réaction.

3. Procédé selon la revendication 1, caractérisé en ce que sur l'organe d'obturation une pression additionnelle rapportée à la pression de fonctionnement du réacteur est transférée.